(19) Europäisches Patentamt / European Patent Office / Office européen des brevets

(11) **EP 3 255 594 A1**

(12) **DEMANDE DE BREVET EUROPEEN**

(43) Date de publication:
**13.12.2017 Bulletin 2017/50**

(51) Int Cl.:
***G06Q 10/06*** *(2012.01)*

(21) Numéro de dépôt: **17175071.4**

(22) Date de dépôt: **08.06.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **10.06.2016 FR 1655397**

(71) Demandeur: **Schneider Electric Industries SAS 92500 Rueil-Malmaison (FR)**

(72) Inventeurs:
• **WILD, Jean**
  **38050 Grenoble Cedex 9 (FR)**

• **HERRIOT, Yann**
  **38050 Grenoble Cedex 9 (FR)**
• **REYMOND, Pascal**
  **38050 Grenoble Cedex 9 (FR)**
• **RIUTORT, Jean François**
  **38050 Grenoble Cedex 9 (FR)**
• **GUYON-AUBERT, Caroline**
  **38050 Grenoble Cedex 9 (FR)**
• **HELIOT, Rodolphe**
  **38050 Grenoble Cedex 9 (FR)**
• **HAVEL, Aurélien**
  **38050 Grenoble Cedex 9 (FR)**

(74) Mandataire: **Brevalex**
  **95, rue d'Amsterdam**
  **75378 Paris Cedex 8 (FR)**

(54) **PROCÉDÉ DE COMMANDE DE LA PRODUCTION D'ÉNERGIE ÉLECTRIQUE D'UN RÉSEAU DE PRODUCTION ET DE DISTRIBUTION D'ÉNERGIE ÉLECTRIQUE**

(57) L'invention concerne un procédé (100) de la production d'énergie d'un réseau, le réseau comprenant une source non intermittente (101a), et une source intermittente (102a, 103a), comprenant :
a. une étape de prévision d'une demande par une charge (104) et d'une incertitude ;
c. une étape de répartition entre les sources d'une énergie à produire, l'étape de répartition étant adaptée pour minimiser une consommation de combustible nécessaire à la production par la source non intermittente, et la source intermittente (102a, 103a),
une étape d. de dimensionnement d'une réserve d'énergie, le dimensionnement étant adapté pour compenser l'incertitude de consommation.

FIG. 1

**Description**

**DOMAINE TECHNIQUE**

Le domaine de l'invention est celui des micros réseaux de production et de distribution d'énergie électrique. Plus particulièrement, l'invention concerne un procédé de commande de la production d'énergie électrique d'un réseau de production et de distribution d'énergie électrique.

**ÉTAT DE LA TECHNIQUE ANTÉRIEURE**

Un micro réseau (« microgrid » selon la terminologie Anglo-Saxonne) est généralement un réseau électrique local destiné à produire et distribuer de l'énergie électrique dans des régions isolées et distantes des grands centres de production d'énergie électrique. Les régions isolées sont par exemple des îles, des régions montagneuses, ou encore des zones désertiques. Le principe de micro réseau s'applique également lorsqu'un bâtiment, quartier, campus, ou autre entité connecté à un large réseau de distribution souhaite gérer sa production d'énergie autrement et augmenter sa stabilité.

Les principaux intérêts des micros réseaux sont qu'ils peuvent fonctionner de manière autonome (en mode îloté, sans connexion au réseau public), et qu'ils se trouvent à proximité des zones de consommation (les charges).

Ainsi, les pertes inhérentes aux réseaux de distributions longues distances sont limitées et l'accès à l'énergie devient possible lorsqu'un réseau de distribution n'est pas présent

L'autonomie énergétique du micro réseau est généralement assurée par des sources d'électricité de différents types parmi lesquelles les groupes électrogènes occupent une place importante. En effet, du point de vue économique, un groupe électrogène représente un faible investissement de départ, et assure une production en électricité suffisamment flexible pour absorber des pics de consommations aux heures de pointes. Cependant, leur fonctionnement nécessite de grandes quantités de combustible (par exemple du diesel), ce qui alourdit, par conséquent, la facture énergétique, la dépendance mais augmente également la pollution atmosphérique.

Afin de pallier ces problèmes économiques et environnementaux, les micro réseaux deviennent hybrides, et comprennent également des sources d'électricité renouvelable telles que des sources d'électricité photovoltaïque ou éoliennes, mais également des systèmes d'accumulation d'énergie électrique. Les systèmes d'accumulation d'énergie électrique sont généralement adaptés pour emmagasiner de l'énergie électrique dès lors que les sources d'électricité renouvelable produisent trop d'électricité, et délivrer l'énergie électrique emmagasinée dans le cas contraire.

La gestion de la production d'électricité reste, cependant, très réactive de sorte qu'il est très difficile de contrôler la consommation de combustible par les groupes électrogènes.

A cet égard, un groupe électrogène fournit de l'énergie électrique supplémentaire (augmentation de la charge, i.e.: le courant injecté par ledit groupe électrogène sur le réseau augmente) dès lors qu'une baisse de l'énergie électrique produite par une source d'électricité renouvelable est observée. Cette baisse peut être durable, et, sans l'intervention du groupe électrogène, générer une instabilité du réseau de production et de distribution d'électricité. Toutefois, une telle baisse peut n'être que passagère (par exemple être associée au passage temporaire d'un nuage devant un panneau photovoltaïque) de sorte que l'intervention du système d'accumulation d'énergie aurait pu la compenser.

Par conséquent, la consommation de combustible par les groupes électrogènes connectés au micro réseau reste significative.

En outre, il existe des méthodes destinées à prédire les niveaux de production et de consommation d'énergie électriques des réseaux. Cependant, ces méthodes présentent un degré d'incertitude tel qu'il est difficile de garantir la stabilité du réseau (par stabilité du réseau, nous entendons équilibre entre l'énergie électrique consommée et l'énergie électrique produite).

Un but de la présente invention est donc de proposer un procédé de commande de la production d'électricité assurant la stabilité du réseau.

Un autre but de la présente invention est de proposer un procédé de commande de la production d'électricité permettant de contrôler au mieux la consommation de combustible par les groupes électrogènes connectés au micro réseau, et pouvant facilement être mis en oeuvre sur un micro réseau pré existant.

**EXPOSÉ DE L'INVENTION**

Le but de l'invention est résolu par un procédé commande de la production d'énergie électrique d'un réseau de production et de distribution d'énergie électrique, le réseau comprenant au moins une source de production non intermittente, et au moins une source de production intermittente, le procédé comprenant :

    a. une étape de prévision d'une demande de consommation d'énergie électrique par au moins une charge, connectée au réseau, au cours d'une première période temporelle donnée, ladite prévision de la demande de consommation étant déterminée avec une incertitude de consommation ;
    c. une étape de répartition, pendant la première période temporelle, entre l'au moins une source de production non intermittente, et l'au moins une source de production intermittente d'une énergie électrique à produire, l'énergie électrique à produire couvrant la demande de consommation prédite à l'étape a., l'étape de répartition étant adaptée pour minimiser une consommation de combustible nécessaire à la production de l'énergie électrique à produire par l'au moins une source de production non intermittente, et l'au moins une source de production intermittente ;

le procédé comprenant en outre une étape d. de dimensionnement d'une réserve d'énergie électrique immédiatement disponible pendant la première période temporelle, le dimensionnement étant adapté pour compenser, au moins en partie, l'incertitude de consommation et/ou l'incertitude de production.

Selon un mode de mise en oeuvre, la réserve d'énergie électrique est assurée par une source de production non intermittente choisie parmi l'au moins une source de production non intermittente et/ou un système d'accumulation d'énergie également connecté au réseau.

Selon un mode de mise en oeuvre, le procédé comprend en outre une étape b. de prévision d'une capacité de production d'énergie électrique, pendant la première période temporelle, de l'au moins une source de production non intermittente et de l'au moins une source de production intermittente, pendant la première période temporelle, ladite prévision de production d'énergie électrique étant déterminée avec une incertitude de production, avantageusement, l'étape d. étant adaptée pour que la réserve d'énergie électrique compense également l'incertitude de production.

Selon un mode de mise en oeuvre, l'étape b. comprend la modélisation, sous forme d'équations mathématiques, de la capacité de production d'énergie électrique de chacune des au moins une source de production non intermittente, et au moins une source de production intermittente en fonction de paramètres physiques, les paramètres physiques étant des grandeurs physiques influençant la capacité de production d'énergie électrique de chacune des au moins une source de production non intermittente et au moins une source de production intermittente.

Selon un mode de mise en oeuvre, les paramètres physiques influençant la capacité de production d'énergie électrique des au moins une source de production intermittente comprennent les prévisions météorologiques pendant la première période temporelle, avantageusement l'ensoleillement et/ou la vitesse du vent pendant la première période temporelle.

Selon un mode de mise en oeuvre, le procédé de commande est exécuté vingt-quatre heures avant le début de la première période, avantageusement le procédé de commande est exécuté à des intervalles de temps régulièrement espacés de manière à tenir compte d'une évolution de la prévision, selon l'étape b, de la capacité de production d'énergie électrique de l'au moins une source de production non intermittente et de l'au moins une source de production intermittente.

Selon un mode de mise en oeuvre, une source de production non intermittente supplémentaire est mise en route dès lors que le dimensionnement de la réserve d'énergie électrique immédiatement disponible pendant la première période temporelle est insuffisant pour compenser, au moins en partie, l'incertitude de consommation et/ou l'incertitude de production.

Selon un mode de mise en oeuvre, l'étape a. la prévision de la demande de consommation d'énergie électrique par l'au moins une charge au cours d'une première période temporelle est égale à une énergie électrique consommée par ladite au moins une charge quarante-huit heures avant le début de la première période temporelle donnée, t pour une durée égale à la première période temporelle.

Selon un mode de mise en oeuvre, l'au moins une source de production intermittente est une source de production d'énergie renouvelable, avantageusement la source de production d'énergie renouvelable comprend au moins une source sélectionnée parmi : une source d'électricité photovoltaïque, une source d'électricité éolienne.

Selon un mode de mise en oeuvre, un système d'accumulation de puissance et/ou d'énergie électrique est connecté au réseau, et est contrôlé pour délivrer de l'électricité sur le réseau ou emmagasiner de l'électricité produite par l'une ou l'autre des sources de production intermittente ou intermittente et non consommée par l'au moins une charge.

Selon un mode de mise en oeuvre, la première période temporelle est égale à vingt-quatre heures.

Selon un mode de mise en oeuvre, l'au moins une source de production non intermittente comprend un groupe électrogène.

## BRÈVE DESCRIPTION DES DESSINS

D'autres caractéristiques et avantages apparaîtront dans la description qui va suivre des modes de mise en oeuvre du procédé de commande de la production d'énergie électrique d'un réseau de production et de distribution d'énergie électrique, donnés à titre d'exemples non limitatifs, en référence aux dessins annexés dans lesquels :

- la figure 1 est un schéma de principe de fonctionnement d'un réseau de production et de distribution d'énergie électrique selon l'invention, le réseau comprenant une source de production non intermittente 101a, deux sources de production intermittentes 102a et 103a, une charge 104 étant connecté audit réseau ;
- la figure 2 est un schéma de principe des étapes du procédé selon l'invention.

## EXPOSÉ DÉTAILLÉ DE MODES DE RÉALISATION PARTICULIERS

La présente invention va maintenant être décrite dans le contexte des micros réseaux, mais peut très bien s'étendre à tout de type de réseau de production et de distribution d'électricité. Ainsi, sauf indication contraire, la mention « micro réseau » pourra aussi bien signifier micro réseau que réseau.

La présente invention développe le concept de réserve d'énergie électrique. En effet, les prévisions de consommation et de production d'énergie électrique peuvent être entachées d'une incertitude, et ainsi conduire à un déséquilibre entre l'énergie consommée et l'énergie produite. L'invention propose alors de mettre en place une réserve d'énergie électrique immédiatement disponible permettant de compenser les fluctuations de consommation et/ou de production d'énergie électrique.

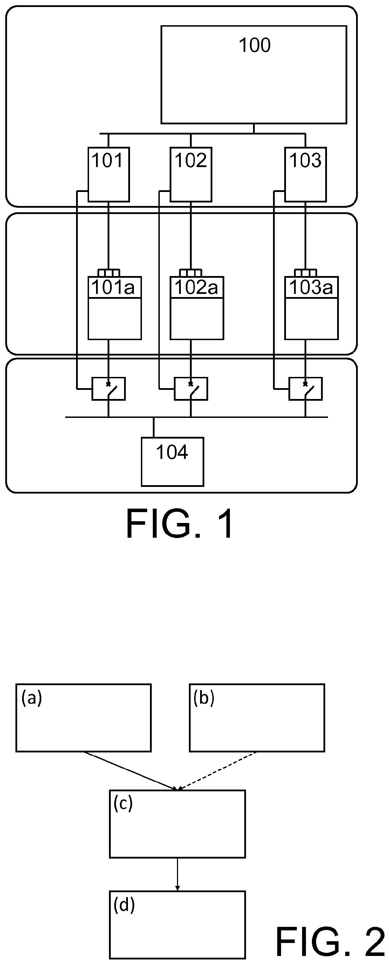

En référence aux figures 1 et 2, nous allons donc décrire un procédé de commande 100 de la production d'énergie électrique d'un réseau de production et de distribution d'énergie électrique.

Un micro réseau comprend généralement des sources de production d'électricité. Les sources de production d'électricité produisent de la puissance et/ou de l'énergie électrique délivrée sous forme d'une tension et d'un courant alternatif de fréquence f au micro réseau.

Parmi les sources de production d'électricité, il faut compter les sources de production non intermittente 101a. Par source de production non intermittente 101a, nous entendons des sources de production d'électricité contrôlables.

Les sources de production non intermittente 101a dans le contexte de la présente invention consomment un combustible pour produire de l'électricité, par exemple du fuel, du mazout, du gaz.

Une source de production d'électricité non intermittente 101a peut ainsi être un groupe électrogène.

Le micro réseau selon l'invention comprend donc au moins une source de production non intermittente 101a.

Le micro réseau comprend également au moins une source de production intermittente 102a, 103a. Une source d'énergie intermittente est une source d'énergie non contrôlable et/ou dépendante de paramètres externes tels que les conditions météorologiques.

A titre d'exemple, les sources d'énergie renouvelable sont des sources de production d'électricité intermittente.

Une source d'énergie renouvelable peut comprendre des panneaux photovoltaïques, des éoliennes, des hydroliennes, des machines thermodynamiques.

Au moins une charge 104 est connectée au micro réseau. L'au moins une charge 104 est destinée à consommer de l'électricité délivrée sur le micro réseau par l'au moins une source de production non intermittente 101a et par l'au moins une source de production intermittente 102a, 103a.

Plus particulièrement, la quantité d'électricité consommée par l'au moins une charge 104 est la somme d'une quantité d'électricité non intermittente et d'une quantité d'électricité intermittente. La quantité d'électricité non intermittente et la quantité d'électricité intermittente sont produites, respectivement, par la source de production non intermittente 101a et par la source de production intermittente 102a, 103a.

Les termes quantité d'électricité et énergie électrique auront la même signification tout au long de la description, et seront identifiées à une énergie électrique.

Par ailleurs, nous entendons par consommation d'électricité, consommation d'énergie électrique.

L'au moins une charge 104 d'électricité peut être un équipement industriel (par exemple une usine et ses machines), un équipement domestique (par exemple l'électroménager équipant une habitation), le mobilier urbain connecté au micro réseau, des bornes de recharge électriques...

Le procédé de commande 100 de la production d'énergie électrique du micro réseau selon l'invention comprend une étape a. de prévision d'une demande de consommation d'énergie électrique par l'au moins une charge 104, connectée au réseau, au cours d'une première période temporelle donnée.

Il est entendu que la première période temporelle est une période débutant à un premier instant et se terminant à un second instant fixe et prédéterminés. Le premier instant et le second instant peuvent être des instants fixes d'une même journée.

Par exemple, la première période temporelle peut être d'une durée de vingt-quatre (24) heures.

L'étape a. de prévision de la demande de consommation d'énergie électrique par l'au moins une charge 104 peut être basée sur un historique de la consommation d'énergie électrique de ladite au moins une charge 104.

Par exemple, la prévision de la consommation d'énergie électrique par l'au moins une charge 104, pendant la prochaine première période temporelle à venir, peut être égale à la consommation effective par ladite au moins une charge 104 lors d'une même période temporelle passée. La prochaine période temporelle à venir et la même période temporelle passée, dans l'exemple donné, débutent et se terminent aux mêmes instants de deux journées différentes.

De manière avantageuse, la prévision de la demande de consommation d'énergie électrique par l'au moins une charge 104 au cours de la première période temporelle à venir est égale à l'énergie électrique consommée par ladite au moins une charge 104 quarante-huit (48) ou vingt-quatre (24) heures avant le début de la première période temporelle et pour une durée égale à la première période temporelle. Ainsi, la prévision de la consommation d'énergie électrique par l'au moins une charge 104 basée sur une consommation historique au cours des vingt-quatre ou quarante-huit heures précédant le début de la première période temporelle permet d'estimer, avec une relativement bonne approximation, l'énergie électrique qui sera consommée par l'au moins une charge 104 au cours de la prochaine première période temporelle.

Toujours de manière avantageuse, la prévision de la demande de consommation d'énergie électrique par l'au moins un charge 104 au cours de la première période temporelle à venir est égale à l'énergie électrique consommée par ladite au moins une charge 104 au cours d'une journée d'une semaine précédente, par exemple, la semaine immédiatement précédente, ou une semaine du mois précédent, ou une semaine de l'année précédente.

La prévision selon l'étape a. peut être affinée en considérant les prévisions météorologiques. En effet, les changements climatiques, survenant par exemple d'une journée à l'autre, peuvent également avoir une influence sur la consommation d'énergie électrique par les charges 104 (par exemple, une baisse des températures peut nécessiter la mise en marche des systèmes de chauffage, et par conséquent réviser à la hausse l'estimation de la demande de consommation d'énergie électrique par l'au moins une charge 104). Ainsi, dès lors qu'ils sont prévisibles, les changements climatiques peuvent être utilisés pour affiner la prévision de la demande de consommation d'énergie électrique par l'au moins une charge 104.

La prévision selon l'étape a. est cependant entachée d'une incertitude de consommation. En effet, l'énergie électrique effectivement consommée peut fluctuer autour de la prévision de consommation d'énergie électrique sur une gamme d'énergie électrique déterminée par l'incertitude de consommation.

Par ailleurs, plus les prévisions sont exécutées à long terme, plus l'incertitude de consommation d'énergie électrique est importante.

L'incertitude peut être déterminée à l'aide de données de consommation d'énergie électrique historiques. Par exemple en mesurant les fluctuations de demande de consommation d'énergie électrique sur une période de temps donnée.

Le procédé 100 selon l'invention peut comprendre également une étape b. de prévision d'une capacité de production d'énergie électrique, pendant la première période temporelle, de l'au moins une source de production non intermittente 101a et de l'au moins une source de production intermittente 102a, 103a.

La prévision de la capacité de production est exécutée pour chacune des sources de production d'électricité connectée au réseau. Ainsi, la prévision de production d'électricité par une source de production d'électricité donnée est Eref.

La prévision de la capacité de production lors de l'étape b. peut être exécutée en considérant un historique de production effectivement réalisé par l'au moins une source de production non intermittente 101a et par l'au moins une source de production intermittente 102a, 103a. La considération de données historiques est similaire à ce qui est décrit pour la réalisation de l'étape a.

La prévision de la capacité de production lors de l'étape b. peut également être réalisée par la modélisation, sous forme d'équations mathématiques, de la capacité de production d'énergie électrique de chacune des au moins une source de production non intermittente

101a, et au moins une source de production intermittente 102a, 103a en fonction de paramètres physiques, les paramètres physiques étant des grandeurs physiques influençant la capacité de production d'énergie électrique de chacune des au moins une source de production non intermittente 101a et au moins une source de production intermittente. A cet égard, l'homme de métier pourra consulter le document [1] cité à la fin de la description.

La modélisation sous forme d'une équation mathématique de la capacité de production d'énergie électrique de chacune des au moins une source de production non intermittente 101a, et au moins une source de production intermittente 102a, 103a en fonction de paramètres physiques est bien connue par l'homme du métier et ne sera donc pas détaillée dans la description.

Par exemple, la production d'énergie électrique par un groupe électrogène dépend essentiellement de la puissance nominale dudit groupe, ainsi que des puissances minimale et maximale qu'il peut délivrer. Cependant, d'autres paramètres influencent sa capacité de production d'énergie électrique, comme par exemple :

- son état : en marche ou à l'arrêt,
- sa réserve en combustible,
- la longueur des lignes électriques (régissant les pertes électriques) reliant le groupe électrogène et l'au moins une charge 104.

La liste de ces paramètres physiques n'est pas exhaustive et peut très bien être complétée par d'autres paramètres (par exemple le temps d'acheminement de combustible, le niveau de consommation dudit combustible par le groupe électrogène...).

Ainsi, la capacité de production d'énergie électrique par un groupe électrogène peut être modélisée sous forme d'une équation mathématique tenant compte des paramètres physiques précités.

De manière équivalente, la capacité de production d'une source d'énergie renouvelable peut également être modélisée sous forme d'une équation mathématique. Le modèle peut alors par exemple prendre en compte :

- la puissance nominale de la source d'énergie renouvelable,
- l'ensoleillement ou la vitesse du vent en fonction du type de source d'énergie renouvelable.

Ainsi, la connaissance des prévisions météorologiques et du modèle mathématique régissant la capacité de production d'énergie électrique de la source d'énergie renouvelable rend possible la prévision de la quantité d'électricité qui sera produite par ladite source pendant la première période temporelle. Par exemple, l'énergie E (en Wh) produite par une source d'énergie renouvelable du type panneau photovoltaïque est donnée par la relation suivante :

$$E = S * r * H * Cp.$$

Où S est la surface totale des panneaux photovoltaïques, r le rendement des panneaux photovoltaïques, H l'ensoleillement, et Cp un coefficient de perte (généralement inférieur à 0.9).

Le fonctionnement du système d'accumulation de puissance et/ou d'énergie peut également être modélisé par un jeu d'équations mathématiques. Il faut cependant souligner qu'un système d'accumulation de puissance et/ou d'énergie est soumis à un vieillissement (« aging » selon la terminologie Anglo-Saxonne) dès qu'il subit des cycles de charge et de décharge. Cette contrainte peut être prise en compte comme paramètre influençant le fonctionnement dudit système d'accumulation. En effet, un système d'accumulation représente un investissement important, et il peut être parfois préférable de mettre en marche un groupe électrogène pour fournir de l'électricité plutôt que d'imposer un cycle de charge/décharge supplémentaire à un système d'accumulation.

Cependant, quelle que soit la méthode employée pour l'exécution de l'étape b., la prévision de capacité de production d'énergie électrique, au cours de la première période temporelle, est également entachée d'une incertitude de production. En effet, l'énergie électrique effectivement produite peut fluctuer autour de la prévision de production d'énergie électrique sur une gamme d'énergie électrique déterminée par l'incertitude de production. Ainsi, la production d'électricité de chacune des sources peut être comprise entre une énergie électrique minimale (Emin) et une énergie électrique maximale (Emax). Il est entendu que les grandeurs Emin et Emax sont différentes pour chacune des sources de production d'électricité.

Par ailleurs, plus les prévisions sont exécutées à long terme, plus l'incertitude de production d'énergie électrique est importante.

Le procédé 100 selon l'invention comprend également une étape c. de répartition, pendant la première période temporelle, entre l'au moins une source de production non intermittente 101a, et l'au moins une source de production intermittente 102a, 103a d'une énergie électrique à produire.

L'énergie électrique à produire est égale à la prévision de l'étape a. de sorte qu'il y a équilibre entre l'énergie électrique produite (par les au moins une source de production intermittente et intermittente) et l'énergie électrique consommée, conformément à la prédiction, par l'au moins une charge 104.

L'étape de répartition est également adaptée pour minimiser une consommation de combustible nécessaire à la production de l'énergie électrique à produire par l'au moins une source de production non intermittente 101a, et l'au moins une source de production intermittente 102a, 103a.

La prédiction de la capacité de production d'électricité par une source d'énergie renouvelable peut également permettre d'adapter au mieux la production d'électricité par l'au moins une source de production non intermittente 101a, et ainsi optimiser (minimiser) la consommation de combustible par l'au moins une source de production non intermittente 101a.

Cependant les fluctuations de consommation d'énergie électrique et de production d'énergie électrique peuvent conduire à un déséquilibre entre production et consommation d'énergie électrique.

Selon un premier cas de figure, il peut y avoir un excès d'énergie électrique. Il est alors possible, par exemple, d'ajuster le niveau de production de l'au moins une source d'énergie renouvelable. Par exemple, l'énergie débitée par un panneau photovoltaïque peut être ajustée avec un module MPP (« Maximum Power Point Tracker » selon la terminologie Anglo-Saxonne), de sorte qu'il n'y ait pas d'excès d'énergie électrique sur le réseau. Il est également possible de pourvoir le réseau d'un système d'accumulation d'énergie électrique adapté pour emmagasiner tout surplus de production d'énergie électrique. Il est également possible de réduire la production d'énergie électrique de l'au moins une source d'énergie non intermittente 101a.

Selon un second cas de figure, l'énergie produite est en défaut par rapport à l'énergie électrique effectivement consommée. Ainsi, une réserve d'énergie doit être immédiatement disponible pour rétablir l'équilibre entre la consommation et la production d'énergie électrique.

Dans les deux cas de figure précités, nous considérons que l'équilibre est rétabli par une réserve, négative dans le premier cas de figure et positive dans le second de figure.

Ainsi, le procédé selon l'invention comprend une étape d. de dimensionnement d'une réserve d'énergie électrique immédiatement disponible pendant la première période temporelle, le dimensionnement étant adapté pour compenser, au moins en partie, l'incertitude de consommation.

Le dimensionnement de la réserve d'énergie électrique peut également être adapté pour compenser, au moins en partie, l'incertitude de production dès lors que l'étape c. est exécutée.

Par compenser, au moins en partie, l'incertitude de consommation et/ou l'incertitude de production, nous entendons rétablir, au moins en partie, l'équilibre entre consommation et production d'énergie électrique.

Par dimensionnement d'une réserve, nous entendons réserver au moins une partie de la capacité de production d'au moins une source de production non intermittente, destinée à être délivrée immédiatement sur le réseau pour compenser des fluctuations de consommation et/ou de production d'énergie électrique dues aux incertitudes de consommation et de production. De manière complémentaire, le rôle de réserve peut être joué par un système d'accumulation d'énergie.

Ainsi, une baisse passagère (fluctuation) de la production d'électricité par l'au moins une source d'énergie renouvelable ne conduira pas nécessairement au démarrage d'une source de production non intermittente 101a (par exemple un groupe électrogène) supplémentaire. La baisse passagère de production d'électricité pourra, par exemple, être compensée par la réserve dimensionnée à l'étape d. Par exemple, un système d'accumulation d'énergie électrique connecté au réseau peut délivrer de l'électricité sur le réseau ou emmagasiner de l'électricité produite par l'une ou l'autre des sources de production intermittente ou intermittente et non consommée par l'au moins une charge 104.

Une baisse passagère de production d'électricité peut par exemple être observée lorsqu'un petit nuage écrante de manière temporaire une source de production photovoltaïque.

Selon les procédés de gestion d'un réseau de production et de distribution d'électricité connus de l'état de l'art, dès lors qu'une baisse de la production d'électricité par des sources d'énergie intermittente (par exemple renouvelable) est observée, un groupe électrogène est mis en marche, que la baisse soit passagère ou durable.

Au contraire d'une baisse passagère (présence soudaine d'un nuage devant des panneaux photovoltaïques par exemple), une baisse durable présente, dans la plupart des cas, un caractère prévisionnel, et peut par conséquent être anticipée.

Une baisse durable correspond par exemple à des conditions météorologiques défavorables à la production d'énergie électrique par une source d'énergie intermittente (par exemple renouvelable). Lesdites conditions météorologiques défavorables sont généralement prévisibles, et le déficit de production d'une source d'énergie intermittente peut être compensé par une autre source de production d'énergie électrique, par exemple une source de production non intermittente (un groupe électrogène par exemple).

Ainsi, la connaissance des prévisions de l'étape a., et éventuellement de l'étape b., permet de répartir, à l'étape c., la production d'énergie électrique entre l'au moins une source de production non intermittente 101a, et l'au moins une source de production intermittente 102a, 103a pendant la première période temporelle.

La mise en place d'une réserve selon l'invention permet de compenser les fluctuations de consommation et de production d'énergie électrique.

La répartition peut, de manière générale, être exécutée selon des critères de minimisation de coûts de production de l'énergie.

Par exemple, en première approximation, le procédé 100 selon l'invention cherchera à minimiser la consommation de combustible.

De manière avantageuse, le procédé de commande 100 est exécuté vingt-quatre heures avant le début de la première période temporelle. Par ailleurs afin d'affiner les prévisions, le procédé de commande 100 peut être exécuté à des intervalles de temps régulièrement espacés de manière à tenir compte d'une évolution de la prévision, selon l'étape b., de la capacité de production d'énergie électrique de l'au moins une source de production non intermittente 101a et de l'au moins une source de production intermittente. Le procédé 100 peut par exemple être exécuté toutes les 30 ou 15 minutes.

Le procédé 100 selon l'invention peut avantageusement être exécuté par un calculateur ou un ordinateur.

La donnée de sortie du procédé selon l'invention comprend une énergie électrique à fournir pendant la première période temporelle par chaque type de source de production. Les grandeurs Eref, Emin, et Emax sont également fournies pour chacune des sources de production d'énergie électrique intermittentes et non intermittentes.

Les prévisions des étapes a. et b. permettent ainsi d'établir un plan de charge (à savoir une quantité d'énergie électrique à produire par chacune des sources de production d'énergie électrique intermittente et non intermittente). La réserve, assurée par au moins une source de production non intermittente, permet de compenser les fluctuations de consommation et/ou de production d'énergie électrique.

Le procédé 100 selon l'invention peut ainsi être mise en oeuvre sur un réseau pré existant sans nécessiter de changement majeur dudit réseau.

Dans le contexte d'un micro réseau (tel que défini dans la partie état de la technique antérieur), le procédé selon l'invention constitue une couche supérieure de contrôle du micro réseau. Autrement dit, le procédé apporte un niveau de contrôle supplémentaire permettant à des contrôleurs 101, 102, 103 (sur la figure 1) de commander la production d'électricité aux sources 101a, 102a et 103a.

Cependant, dès lors qu'une baisse durable, et non prévue, de production d'énergie électrique d'une source d'énergie renouvelable est observée, le contrôleur 102 des groupes électrogènes peut décider de compenser ladite baisse en augmentant la production d'énergie électrique par les groupes électrogènes qu'il contrôle. Il peut par exemple décider de démarrer un groupe électrogène supplémentaire.

**RÉFÉRENCE**

[1] : Adel Mellit, Alessandro Massi Pavan, "A 24-h forecast of solar irradiance using artificial neural network: Application for performance prediction of a grid-connected PV plant at Trieste, Italy", Solar Energy, Volume 84, Issue 5, May 2010, Pages 807-821, ISSN 0038-092X.

## Revendications

1. Procédé de commande (100) de la production d'énergie électrique d'un réseau de production et de distribution d'énergie électrique, le réseau comprenant au moins une source de production non intermittente (101a), et au moins une source de production intermittente (102a, 103a), le procédé comprenant :

    a. une étape de prévision d'une demande de consommation d'énergie électrique par au moins une charge (104), connectée au réseau, au cours d'une première période temporelle donnée, ladite prévision de la demande de consommation étant déterminée avec une incertitude de consommation ;
    c. une étape de répartition, pendant la première période temporelle, entre l'au moins une source de production non intermittente (101a), et l'au moins une source de production intermittente (102a, 103a) d'une énergie électrique à produire, l'énergie électrique à produire couvrant la demande de consommation prédite à l'étape a., l'étape de répartition étant adaptée pour minimiser une consommation de combustible nécessaire à la production de l'énergie électrique à produire par l'au moins une source de production non intermittente (101a), et l'au moins une source de production intermittente (102a, 103a);

    le procédé comprenant en outre une étape d. de dimensionnement d'une réserve d'énergie électrique immédiatement disponible pendant la première période temporelle, le dimensionnement étant adapté pour compenser, au moins en partie, l'incertitude de consommation et/ou l'incertitude de production.

2. Procédé selon la revendication 1, dans lequel la réserve d'énergie électrique est assurée par une source de production non intermittente choisie parmi l'au moins une source de production non intermittente (101a) et/ou un système d'accumulation d'énergie également connecté au réseau.

3. Procédé selon la revendication 1 ou 2, dans lequel le procédé comprend en outre une étape b. de prévision d'une capacité de production d'énergie électrique, pendant la première période temporelle, de l'au moins une source de production non intermittente (101a) et de l'au moins une source de production intermittente (102a, 103a), pendant la première période temporelle, ladite prévision de production d'énergie électrique étant déterminée avec une incertitude de production, avantageusement, l'étape d. étant adaptée pour que la réserve d'énergie électrique compense également l'incertitude de production.

4. Procédé selon la revendication 3, dans lequel l'étape b. comprend la modélisation, sous forme d'équations mathématiques, de la capacité de production d'énergie électrique de chacune des au moins une source de production non intermittente (101a), et au moins une source de production intermittente (102a, 103a) en fonction de paramètres physiques, les paramètres physiques étant des grandeurs physiques influençant la capacité de production d'énergie électrique de chacune des au moins une source de production non intermittente (101a) et au moins une source de production intermittente.

5. Procédé selon la revendication 4, dans lequel les paramètres physiques influençant la capacité de production d'énergie électrique des au moins une source de production intermittente (102a, 103a) comprennent les prévisions météorologiques pendant la première période temporelle, avantageusement l'ensoleillement et/ou la vitesse du vent pendant la première période temporelle.

6. Procédé selon l'une des revendications 3 à 5, dans lequel le procédé de commande (100) est exécuté vingt-quatre heures avant le début de la première période, avantageusement le procédé commande (100) est exécuté à des intervalles de temps régulièrement espacés de manière à tenir compte d'une évolution de la prévision, selon l'étape b, de la capacité de production d'énergie électrique de l'au moins une source de production non intermittente (101a) et de l'au moins une source de production intermittente (102a, 103a).

7. Procédé selon l'une des revendications 3 à 6, dans lequel une source de production non intermittente supplémentaire est mise en route dès lors que le dimensionnement de la réserve d'énergie électrique immédiatement disponible pendant la première période temporelle est insuffisant pour compenser, au moins en partie, l'incertitude de consommation et/ou l'incertitude de production.

8. Procédé selon l'une des revendications 1 à 7, dans lequel l'étape a. la prévision de la demande de consommation d'énergie électrique par l'au moins une charge (104) au cours d'une première période temporelle est égale à une énergie électrique consommée par ladite au moins une charge (104) quarante-huit heures avant le début de la première période temporelle donnée, et pour une durée égale à la première période temporelle.

9. Procédé selon l'une des revendications 1 à 8, dans lequel l'au moins une source de production intermittente (102a, 103a) est une source de production d'énergie renouvelable, avantageusement la source de production d'énergie renouvelable comprend au moins une source sélectionnée parmi : une source d'électricité photovoltaïque, une source d'électricité éolienne.

**10.** Procédé selon l'une des revendications 1 à 9, dans lequel un système d'accumulation de puissance et/ou d'énergie électrique est connecté au réseau, et est contrôlé pour délivrer de l'électricité sur le réseau ou emmagasiner de l'électricité produite par l'une ou l'autre des sources de production intermittente ou intermittente et non consommée par l'au moins une charge (104).

**11.** Procédé selon l'une des revendications 1 à 10, dans lequel la première période temporelle est égale à vingt-quatre heures.

**12.** Procédé selon l'une des revendications 1 à 11, dans lequel l'au moins une source de production non intermittente (101a) comprend un groupe électrogène.

FIG. 1

FIG. 2

Europäisches
Patentamt

European
Patent Office

Office européen
des brevets

**RAPPORT DE RECHERCHE EUROPEENNE**

Numéro de la demande

EP 17 17 5071

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 028 080 A1 (SOC TECHNIQUE POUR L'ENERGIE ATOMIQUE TECHNICATOME [FR]) 6 mai 2016 (2016-05-06) * alinéa [0010]; figure 1 * ----- | 1-12 | INV. G06Q10/06 |

| | | | DOMAINES TECHNIQUES RECHERCHES (IPC) |
|---|---|---|---|
| | | | G06Q |

Le présent rapport a été établi pour toutes les revendications

| Lieu de la recherche | Date d'achèvement de la recherche | Examinateur |
|---|---|---|
| La Haye | 22 juin 2017 | Nicoli, Félix |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 17 5071

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-06-2017

| Document brevet cité au rapport de recherche | Date de publication | Membre(s) de la famille de brevet(s) | Date de publication |
|---|---|---|---|
| FR 3028080 A1 | 06-05-2016 | AUCUN | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ADEL MELLIT ; ALESSANDRO MASSI PAVAN.** A 24-h forecast of solar irradiance using artificial neural network: Application for performance prediction of a grid-connected PV plant at Trieste, Italy. *Solar Energy,* Mai 2010, vol. 84 (5), ISSN 0038-092X, 807-821